# EUROPEAN PATENT APPLICATION

(11) **EP 1 229 424 A2**
(43) Date of publication of application: **07.08.2002**
(21) Application number: 02000796.9
(22) Date of filing: 14.01.2002
(51) Int. Cl.: G06F 1/00

(54) **Method and apparatus for synchronizing real-time clocks of time stamping cryptographic modules**

(30) Priority: 01.02.2001 US 774599
(71) Applicant: Chrysalis- ITS Inc., Ottawa, Ontario K2G 6P9 (CA)
(72) Inventor: Couillard, Bruno, Gatineau, Quebec J8T 7Y6 (CA)
(74) Representative: Kehl, Günther, Dipl.-Phys.

(57) **Abstract**

Disclosed is a method and apparatus for updating an on-board clock device, for instance a clock that is embodied on a time-stamping cipher module, to compensate for individual deviation from an external time-source. Typically, a computer system, such as a network server, is in communication with a cryptographic system comprising a plurality of time-stamping cipher modules that provide dedicated time-stamping and cryptographic functions for the computer system. Due to individual clock drift, the synchronization of time values provided by the on-board clocks of the plurality of modules tends to decrease over time. Periodically, each module provides a signal indicating a time associated with the module to each of other modules of the plurality of modules for determining a synchronization between the modules and for detecting modules that are other than synchronized with the synchronized modules. When a module is detected as other than synchronized with the synchronized modules, that module is automatically deactivated or alternatively that module is synchronized with the synchronized modules.

## Description

### Field of the Invention

The invention relates to time synchronization of an electronic module based system for providing time stamping and cryptographic function. More particularly, the invention relates to an apparatus and method for synchronizing real-time clocks of a plurality of time stamping cipher modules within a same module housing.

### Background of the Invention

The authentication of electronically stored documents is achieving a greater significance in that it is becoming relatively common to exchange electronically stored documents between parties to a transaction. Using digital signatures, it is possible to undeniably determine that the party performing the signature operation is properly authorized to do so. However, if a dispute arises as to what was transmitted as opposed to what was received it may be difficult to establish which version of a document is correct and/or has precedence in time. As a result, many Electronic Document Interchange (EDI) transactions having any monetary significance are normally confirmed with physical documents to provide a paper audit trail. Of course, reducing documents to physical form defeats in large measure the advantages of EDI.

Accordingly, it is useful to know with certainty the date and time of a digital signature, particularly in the context of electronically maintained diaries, inventor's scientific logs, journals, electronic bids, contracts or the like. One way to resolve this problem is to have all critical documents signed and time stamped by an impartial third party "digital notary" service. Unfortunately, it may be difficult to find such a third party; or it may be difficult to obtain the services in a timely manner. For isolated users, such a digital notary might not be readily available. Moreover, this process may become error-prone, tedious, and a source of bottlenecks, while also creating potential security breaches.

Another solution is to provide in an encrypted form certain data associated with a time and/or a date. Thus the document to be transferred is digitally signed and is time stamped with an encrypted time and date that are associated with the creation of the. document. Of course, the integrity of such a method depends critically upon the reliability of the date/time source that is available, for instance a real time clock built into a personal computer or lap-top. Unfortunately, the ability to reset the internal date/time is built into almost all personal computer operating systems, which permits any user to simply set back the clock in their computer and to perform their digital signature operation at an apparently earlier time.

It is known in the prior art to encrypt data for transfer using a time and date obtained from a "trusted clock". U.S. Patent No. 6,105,013 discloses a module for performing secure transactions and digital notary services that includes a continuously running real time clock. The module is designed such that any unauthorized attempt to modify its internal settings will be readily apparent or will result in the deactivation of the module. A service provider initially sets up the module to perform useful functions, such as a priority verification service. The service provider reads the real time clock from each module and creates a module-dependent clock offset object that contains the difference between the reading of the real-time clock and some convenient reference time. The true time can then be obtained from any module by adding the value of the clock offset object to the value obtained from the real-time clock. After some predetermined period of usage, the end-user returns the module to the service provider, pays a fee and receives a new module. Of course, the true time that is obtained from each real time clock can only be trusted to the same extent that the service provider who performed the initial calibration is trusted. The task of calibrating each module separately is an onerous burden on the service provider and may be prone to errors. Further, individual digital clocks are known to vary slightly in dependence upon slight manufacturing inconsistencies and environmental influences. Depending upon the precision that is desired for a particular application, the unpredictable "clock drift" unique to each module will necessitate more frequent hardware replacements by the service provider.

U.S. Patent No 5,001,752 issued to Fischer in 1991 discloses a secure, microprocessor based device embodying a "trusted clock" to countersign important digital signatures by signing them in conjunction with the notarization time taken from the device's trusted time source. The "trusted clock" is provided with an on-board power source and is packaged in a secure fashion so that the contents of the storage device cannot be externally accessed or observed and so that the clock module cannot be readily tampered with or altered. In a preferred embodiment the device is provided with two "trusted clocks" and a means for comparing the difference between the two clocks with a predetermined threshold value. The two clocks may be used to mutually check each other to ensure neither becomes erratic, thereby extending the period of time during which the clocks may be considered to be "trusted". If, as a result of clock drift, the time returned by the two clocks differs by an amount greater than the predetermined threshold value, an on-board processor automatically sends a signal to deactivate the unit. Unfortunately, this action requires replacement of the entire module, and a loss of time stamping capabilities during the down-time ensues. It is a disadvantage that it is other than possible for the device to obtain confirmation from an external source to verify that its "trusted clocks" are operating within the predetermined threshold, such that when both clocks drift in a substantially similar manner it is other than possible to detect erratic behavior.

U.S. Patent No 5,936,149 issued to Fischer in 1999 discloses an improved token-based device; for instance a device embodied in an MCIA card. The token includes a first and a second real time clock, such that the clocks may be used to mutually check each other to help to ensure neither becomes erratic. Prior to the modules being shipped to an end user, a service provider performs an initialization process. During the initialization process, both notary device clocks accept a current date/time from a master clock having a high degree of accuracy. After a period of time, such as a day or a week, the notary device is resynchronized with the same master clock and an adjustment factor for correcting the "clock drift" unique to that notary device is retained in the devices permanent memory. A calibrated clock reading may be determined by taking a first clock reading from the master clock, storing the first clock reading, taking a second clock reading from the master clock, storing the second clock reading, and counting the number of oscillations between the master clock readings. Then the actual oscillation frequency may be calculated by using the oscillation count divided by the difference between the second and first master clock readings to compute oscillations per unit time, storing this calculated oscillation frequency and adjusting the output of the on-chip clock device in accordance with the calculated oscillation frequency. The current time after calibration may be computed by the steps of: counting the number of oscillations since the first clock reading (a benchmark time), dividing this value by the calibration value, adding the result to the said first clock reading.

Although U.S. Patent No 5,936,149 discloses an apparatus that provides for internal time correction within a same digital notary module, the device suffers the same limitations of the earlier device disclosed in U.S. Patent No 5,001,752. Specifically, the manufacturer must calibrate separately every module prior to shipping the product to the end user. The clock loading process is only allowed to occur once, such that it is other than possible for the end user to provide the module periodic updates from an external trusted time source, for instance a second module. Further, upon the detection of erratic behavior the module is deactivated, and loss of time stamping function occurs until such time that a new module begins operation. This may, in critically important applications, necessitate that a redundant, back-up module is maintained on-site at all times, resulting in an additional cost to the end user. Still further, the module is designed primarily to address the needs of personal computer and laptop users and does not enable the end user to easily expand a cryptographic system by adding modules. Unfortunately, many operations that are performed by a network server or a computer system of a large corporation require a plurality of such time stamping cryptographic modules working in parallel, each time stamping cryptographic module including a real time clock.

It has now been found that it would be advantageous to provide a time stamping cryptographic module having means for polling other modules that are in electrical communication via a same communications bus. It would be further advantageous to provide a method for performing time-consistency checks between said modules and for providing periodic time value updates to modules that have been identified as other than synchronized with the synchronized modules. According to this method a processing capacity of an existing time stamping cryptographic system may be expanded easily by inserting at least an additional blank module within the same communications bus and establishing electrical communication with at least an existing synchronized module. All necessary time and cipher data is supplied to the new module by the at least an existing synchronized module. Advantageously, as the number of modules within a cryptographic system increases, the overall precision and accuracy of the time keeping devices will also increase.

### Object of the Invention

In an attempt to overcome these and other limitations of the prior art, it is an object of the present invention to provide a system and a method for providing for time consistency checks of modules communicating over very short distances, for instance within a same communication bus.

It is a further object of the present invention to provide a system and a method for automatically disabling unreliable modules.

### Summary of the Invention

In accordance with the invention there is provided a method for updating an on-board clock device to compensate for individual deviation from a time value comprising the steps of:
a) providing a signal from each of a plurality of modules indicating a time associated with said module and for use by said module in performing time stamping operations;
b) receiving the signal from each of the plurality of modules and determining a synchronization between the modules to detect synchronized modules and modules that are other than synchronized with the synchronized modules; and,
c) when a module is detected as other than synchronized with the synchronized modules, automatically performing one of synchronizing that module with the synchronized modules and disabling that module from performing timestamping operations.

In accordance with the invention there is further provided a method for verifying an on-board clock device to compensate for individual deviation comprising the steps of:
a) receiving a signal including a plurality of time synchronization values at each of a plurality of modules; and
b) each module determining a synchronization status of itself and, upon determining a status other than in synchronization with the other modules, disabling itself.

In accordance with the invention there is further provided a method for inserting a new time stamping cryptographic module within an existing cryptographic system comprising the steps of:
a) installing a module within a communication bus;
b) detecting the module; and
c) synchronizing the module by setting the real time clock of the module in dependence upon a value indicative of a current time from the real time clocks of other modules,
wherein the step of detecting the module is performed in response to the module providing a signal indicative of a non-synchronized status of the module.

In accordance with the invention there is further provided a time stamping cryptographic module comprising: a real time clock for providing a time measurement for time stamping functions; a microprocessor connected to the real time clock for handling at least a processing function for periodically updating the real time clock; a secure port in electrical communication with the microprocessor for exchanging information with a device external to the module, wherein the secure port is for mating with a corresponding port of a secure communication bus to provide a secure communication channel for exchanging a value which is characteristic of a time of day with a second other module mated with a second other corresponding port of a same secure communication bus for at least a same overlapping period of time; and, a lock for enabling the module in a first state and for disabling the module in a second other state.

In accordance with the invention there is further provided a time stamping cryptographic module comprising: a real time clock for providing a time measurement for time stamping functions; a microprocessor connected to the real time clock for handling at least a processing function for periodically updating the real time clock; a secure port in electrical communication with the microprocessor for exchanging information with a device external to the module, wherein the secure port is for mating with a corresponding port of a secure communication bus to provide a secure communication channel for exchanging a value which is characteristic of a time of day with a second other module mated with a second other corresponding port of a same secure communication bus for at least a same overlapping period of time; means for setting a time of the real time clock in dependence upon a secured time value received from a second other module; and a tamper detection circuit for detecting unauthorized tampering attempts and for providing a signal in dependence thereon and for deactivating the module in response to the signal indicative of an unauthorized tampering attempt.

### Brief Description of the Drawings

The invention will now be described in conjunction with the drawings in which:

Fig. 1a is a simplified block diagram of cryptographic system connected to a computer system according to the present invention;

Fig. 1b is a simplified block diagram of cryptographic system within a computer system according to the present invention;

Fig. 2 is a simplified block diagram of a time stamping cipher module;

Fig. 3 is a simplified block diagram of a time stamping cipher module with an on-board power source and a tamper detection circuit;

Fig. 4 is a simplified block diagram of a time stamping cipher module with a tamper detection circuit;

Fig. 5a is a simplified flow diagram of a method for performing a self-consistency check routine;

Fig. 5b is a simplified flow diagram of another alternative method for performing a self-consistency check routine;

Fig. 5c is a simplified flow diagram of another alternative method for performing a self-consistency check routine;

Fig. 6a is a simplified flow diagram of a method for performing an action in dependence upon detecting a module that is other than synchronized;

Fig. 6b is a simplified flow diagram of another alternative method for performing an action in dependence upon detecting a module that is other than synchronized.

Fig. 7 is a simplified flow diagram of a method for inserting a new time stamping cryptographic token within an existing cryptographic system.

### Detailed Description of the Invention

While the description of the preferred embodiment of the invention disclosed herein is a specific example in which time stamping cryptographic modules are provided in the form of PCMCIA cards within a same module housing. Numerous adaptations of the invention are possible by modifications to the token configuration, number of tokens and the means for providing communication between the tokens, without departing substantially from the teachings of the invention as set forth below.

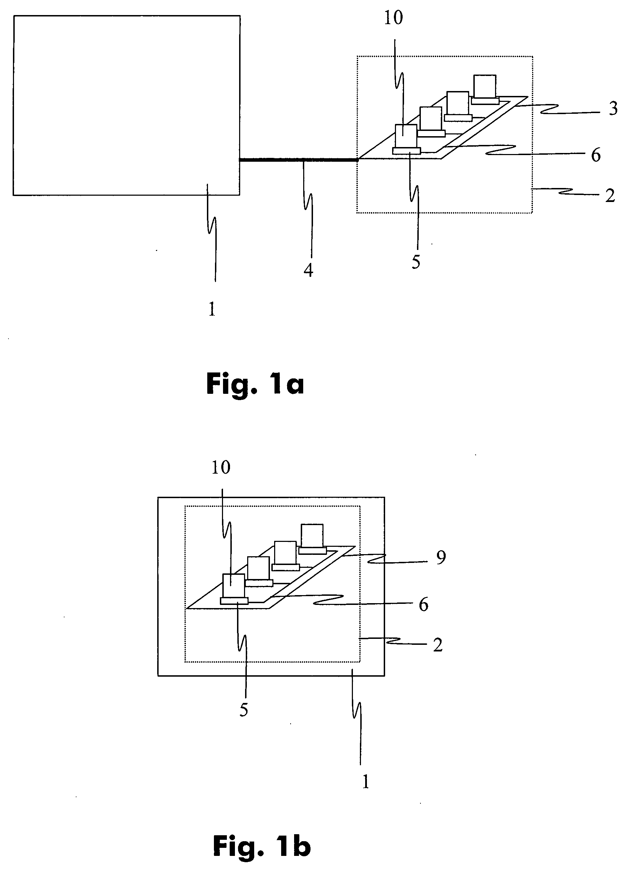

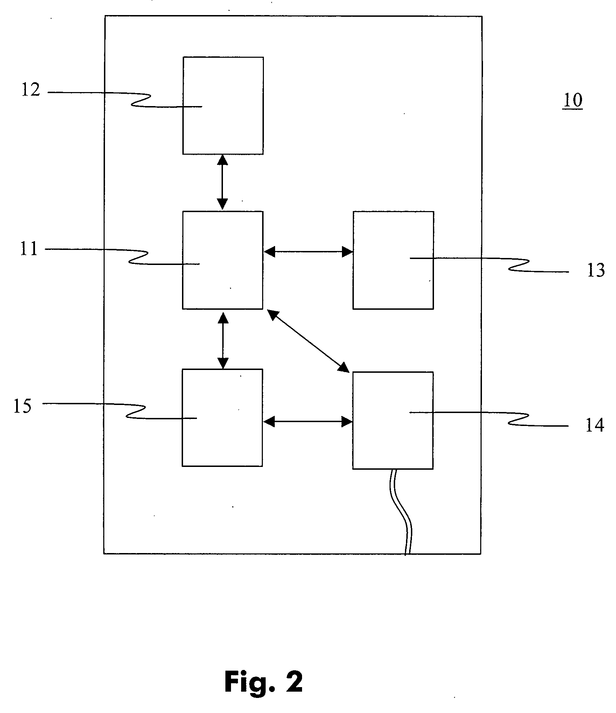

Referring to Fig. 1 and to Fig. 2, shown is a simplified block diagram of a cryptographic system **2** in communication with a computer system in the form of a network server **1** according to the present invention. A plurality of generic modules **10** are provided for performing cryptographic and time stamping functions. Preferably, the plurality of modules **10** are housed within a same module housing **3,** the module housing **3** having at least one of a tamper resistant and a tamper evidencing feature to ensure that undetected unauthorized external access to the modules **10** is other than possible. Additionally, the module housing **3** is preferably maintained in a secure facility, for instance a room to which access is restricted. A secure communication line **4** is for exchanging digital information between the computer system **1** and the cryptographic system **2** for encryption/decryption and time stamping functions. Communication between individual modules **10** of the plurality of modules is via a secure communication bus **6.** A secure port **15** of the module **10** is mated with a corresponding port **5** of the secure communication bus **6.** Conveniently, the modules **10** may draw power from the secure communication bus **6.** Of course, while the present embodiment shows modules **10** inserted within the module housing **3,** other modules of differing configurations could alternatively be used. Further, is to be understood that at least some modules of the plurality of modules may be of a first configuration while the remaining modules of the plurality of modules are of at least a second different configuration. The specific configurations of the modules that are utilized in a cryptographic system are determined in dependence upon considerations such as: volume of data traffic expected; desired module functionality; desired level of security; and cost considerations.

Referring to Fig. 1b, a simplified block diagram of generic modules **10** of a cryptographic system **2** within a computer system **1** according to the present invention is shown. In this alternate embodiment, the modules **10** are inserted into an interface **9** provided within the computer system. Communication between individual modules **10** of the plurality of modules is via a secure communication bus **6.** A secure port **15** of the module **10** is mated with a corresponding port **5** of the secure communication bus **6.** Conveniently, the modules **10** may draw power from the secure communication bus **6.** Of course the specific configurations of the modules that are utilized in a cryptographic system of the type that is described with reference to Fig. 1b are determined in dependence upon considerations such as: volume of data expected; desired functionality; desired level of security; and cost considerations.

Referring again to Fig. 2, a simplified block diagram of a generic time stamping cipher module is shown generally at **10.** The module **10** has a real time clock **12,** volatile memory **13** to store cipher data including at least a secure-electronic-key and data relating to time-keeping functions, a cipher processor **11,** a transceiver **14** and a secure port **15.** Because the module has volatile memory **13** for storing data, removal of the cryptographic module **10** from a power source results in erasure of any cryptographic data and time data stored therein. Advantageously, an unpowered module **10** cannot be removed from the cryptographic system **2** by an unauthorized third party and inserted into a second other cryptographic system to perform unauthorized or fraudulent time stamping or encryption functions. The module **10** also includes an electronic lock for enabling the module in a first state and for disabling the module in a second other state. The electronic lock is preferably a function executable by the cipher processor **11** for disabling a module at least temporarily in dependence upon receiving a signal indicative of a module synchronization status that is other than synchronized with the synchronized modules. Preferably, upon receiving a synchronization signal from at least a synchronized module, the cipher processor **11** performs an un-lock function to enable the module for performing time stamping and cryptographic functions.

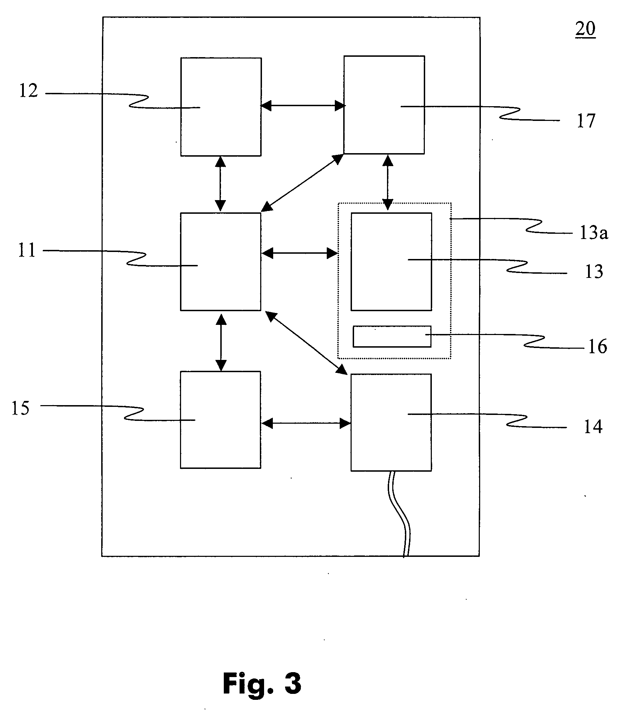

Referring to Fig. 3, a simplified block diagram of a time stamping cipher module with an on-board power source is shown generally at **20.** The time stamping module **20** has a real time clock **12,** volatile memory means **13** and a portable power source in the form of a battery **16** dedicated to the cryptographic module **20,** which collectively constitute a non-volatile memory means **13a** to store cipher data including at least a secure-electronic-key and data relating to time-keeping functions, a cipher processor **11,** a transceiver **14,** a secure port **15,** and a tamper detection circuit **17.** The tamper detection circuit **17** is for detecting at least an unauthorized attempt to externally access or observe the contents of the cryptographic module **20,** and for communicating a signal indicative of the unauthorized external tampering to the cipher processor **11.** In response to receiving the signal, the cipher processor **11** typically erases the cipher data stored in the non-volatile memory **13a,** effectively deactivating the module. The definition of tampering includes, but is not limited to, actions such as the unauthorized removal of the entire module **20** from the module housing 3, any attempts to open the module **20** or any attempts to externally probe the contents of the module **20.** The module **20** also includes an electronic lock for enabling the module in a first state and for disabling cryptographic functions of the module in a second other state. The electronic lock is preferably a function executable by the cipher processor **11** for disabling a module at least temporarily in dependence upon receiving a signal indicative of a module synchronization status that is other than synchronized with the synchronized modules.

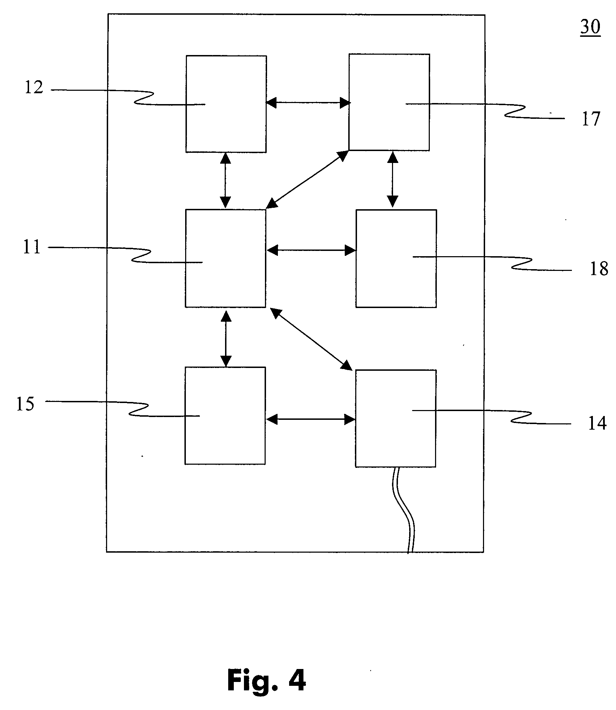

Referring to Fig. 4, a simplified block diagram of a time stamping cipher module with a tamper detection circuit is shown generally at **30.** The time stamping module **30** has a real time clock **12,** non-volatile memory **18** to store cipher data including at least a secure-electronic-key and data relating to time-keeping functions, a cipher processor **11,** a transceiver **14,** a secure port **15,** and a tamper detection circuit **17.** The tamper detection circuit **17** is for detecting at least an unauthorized attempt to externally access or observe the contents of the cryptographic module **30,** and for communicating a signal indicative of the unauthorized external tampering to the cipher processor **11.** In response to receiving the signal, the cipher processor **11** typically erases the cipher data stored in the non-volatile memory **18,** effectively deactivating the module. The definition of tampering includes, but is not limited to, actions such as the unauthorized removal of the entire module **30** from the module housing **3,** any attempts to open the module **30** or any attempts to externally probe the contents of the module **30.** The module **30** also includes an electronic lock for enabling the module in a first state and for disabling cryptographic functionality of the module in a second other state. The electronic lock is preferably a function executable by the cipher processor **11** for disabling a module at least temporarily in dependence upon receiving a signal indicative of a module synchronization status that is other than synchronized with the synchronized modules. Optionally, upon receiving a synchronization signal from at least a synchronized module, the cipher processor **11** performs an un-lock function to enable the module for performing time stamping and cryptographic functions.

The time stamping cipher modules previously described with reference to Figs. 2 to 4 are preferably embodied in a secure device, for instance a PCMCIA card. In operation, the modules are preferably kept at a secure facility within a module housing **3** of a cryptographic system **2,** usually a peripheral device in communication with a computer system **1,** such as.a PCMCIA card reader. Each module is provided with a means for communicating with each of the other time stamping cipher modules within a same module housing **3,** for instance, the secure port **15** of each module is mated with a matching port **5** of a secure communications bus **6** within a same module housing **3.** Since communication delays along such a communications bus are on the order of a few nanoseconds, and time stamping precision on the order of microseconds or even milliseconds is typically required, communication between modules inserted within a same communications bus are considered to be approximately instantaneous. Note that if communication between modules is internal to the module housing **3,** then there is a very high degree of security and the possibility of external "man in the middle" attacks is precluded.

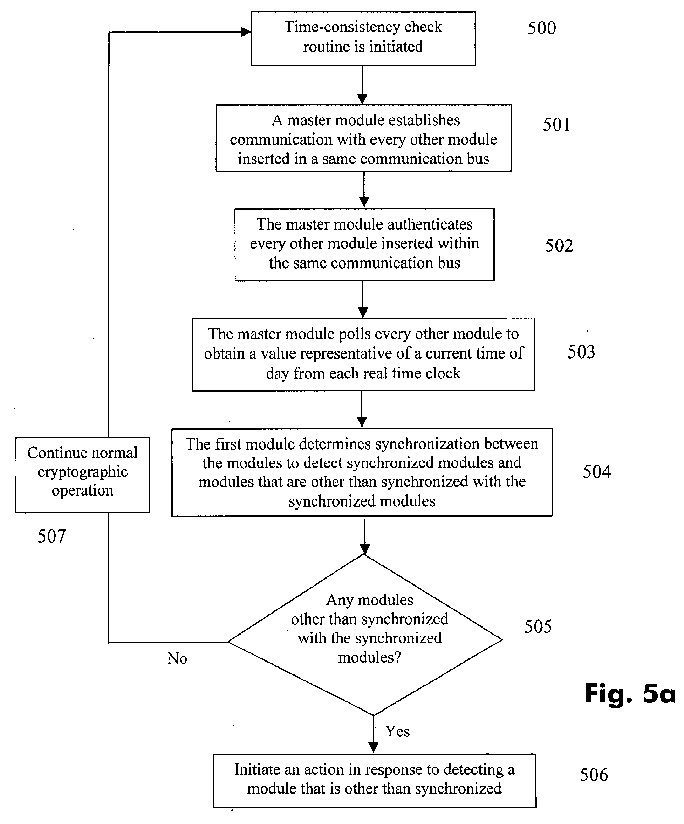

Referring to Fig. 5a, a method for performing a periodic time-consistency check of the "trusted clocks" of a plurality of modules inserted within a same module housing is shown. In the current embodiment a first module is designated as a master module for co-coordinating the time-consistency routines. For instance, the master module is one of the modules inserted in a first position of the secure communication bus **6.** Preferably it is the module with the highest level of cryptographic security and the module previously designated as such by a system operator. The master module receives a signal at step **500** to initiate a time-consistency check. The master module establishes communication with every other module inserted in a same communication bus at step **501,** and authenticates said other modules. Authentication **502** of a module involves determining at least an initialization status and a unique identification for that module. Modules that cannot be authenticated at step 502 are deactivated and an error message is logged to indicate the faulty modules. The master module polls each of the authenticated other modules at step **503** to obtain an on-time point from the real time clock of each module. The master module determines synchronization between the modules at step **504** to detect synchronized modules and modules that are other than synchronized with the synchronized modules. In one embodiment, the master module determines the value of the difference between the time that it registered when the polling signal was sent and the time that each other module registered upon receiving the polling signal. Since communication between the modules is considered to be approximately instantaneous, each of the values determined by the master module should other than exceed a predetermined tolerance, indicating that all modules are synchronized. Corrections for communication delays over such short distances along a dedicated communication bus are not necessary since the associated delays are at least an order of magnitude smaller than the maximum precision desired for most time stamping functions.

At decision step **505** the master module initiates a predetermined response at step **506** in dependence upon detecting at least a module that is other than synchronized with the synchronized modules. The predetermined response is in dependence of at least the level of security that is maintained for a particular cryptographic system. If the level of security is deemed to be substantially low then the predetermined response may include a routine for updating the real time clock(s) of a module that is other than synchronized with the synchronized modules. If the level of security is deemed to be substantially high, then the predetermined response may be to deactivate and isolate the module that is other than synchronized with the synchronized modules. It will be apparent to one of skill in the art that a log entry indicating at least the predetermined response that was initiated is preferably maintained by the master module for subsequent analysis, for instance during one of routine maintenance and replacement of defective modules. Alternatively, if all modules are synchronized, the master module returns the system to a state of normal cryptographic operation at step **507.**

Of course, when the master module is other than synchronized with the synchronized modules, it relinquishes its duties to a second other module within a same module housing. The second other module is designated as a master module according to a predetermined criterion, such as for example the location of the port that it occupies within the communications bus. Once it has been designated as such, the second other module carries out the steps of the routine described with reference to Fig. 5a. The master module is effected according to the method for dealing with modules that are other than synchronized with the other modules.

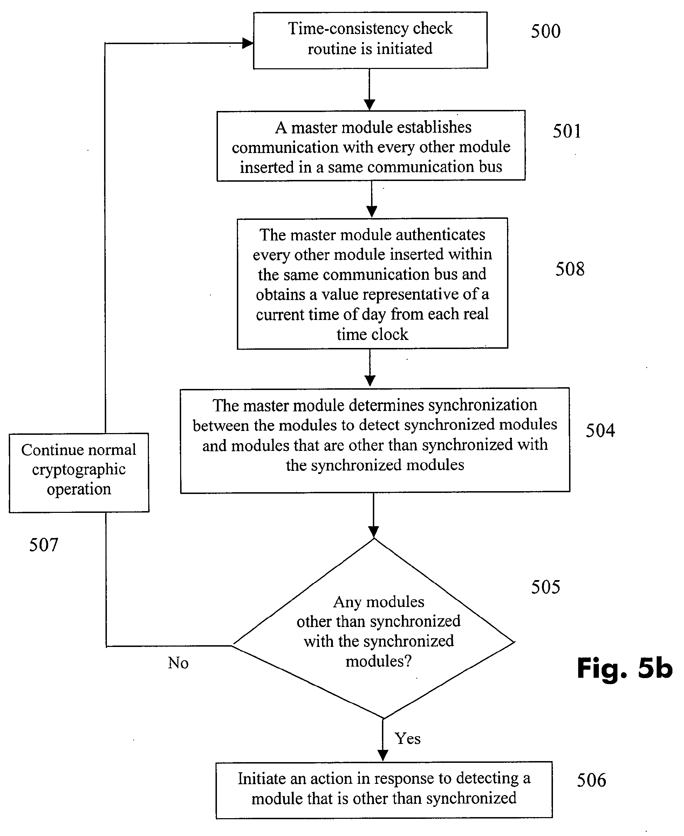

Referring to Fig. 5b, another method for performing a periodic consistency check between the "trusted clocks" of a plurality of modules contained within a same communications bus is shown. In the current embodiment a first module is designated as a master module for co-coordinating the time-consistency routines. For instance, the master module is one of the module inserted in a first position of the secure communication bus **6**, the module with the highest level of cryptographic security and the module previously designated as such by a system operator. The master module receives a signal at step **500** to initiate a time-consistency check. The master module establishes communication with every other module inserted in a same communication bus at step **501.** At step **508** the master module performs a combined authentication and polling operation. The operation performed at step **508** includes the action of sending a data packet, for instance a digital document, to each other module of the plurality of other modules. Each other module receives said data packet and encrypts it with a unique identification and with a time stamp using a time and date registered by a real time clock of the module at the time the data packet was received by the module. Each module returns the encrypted and time stamped data packet to the master modules. The master module decrypts the encrypted and time stamped data packet and extracts the unique identification to identify and to authenticate the module originating the packet. Further, the master module extracts the time stamp provided by said other module and compares the time of receipt registered by the other module with the time that was registered by the real time clock of the master module when the original data packet was transmitted. The master module determines synchronization between the modules at step **504** to detect synchronized modules and modules that are other than synchronized with the synchronized modules. In one embodiment, the master module determines the value of the difference between the time that it registered when the polling signal was sent and the time that each other module registered upon receiving the polling signal. Since communication between the modules is considered to be approximately instantaneous, each of the values determined by the master module should other than exceed a predetermined tolerance, indicating that all modules are synchronized. Corrections for communication delays over such short distances along a dedicated communication bus are other than necessary since the associated delays are at least an order of magnitude smaller than the maximum precision desired for most time stamping functions.

At decision step **505** the master module initiates a predetermined response at step **506** in dependence upon detecting at least a module that is other than synchronized with the synchronized modules. The predetermined response is in dependence of at least the level of security that is maintained for a particular cryptographic system. If the level of security is deemed to be substantially low then the predetermined response may include a routine for updating the real time clocks of a module that is other than synchronized with the synchronized modules. If the level of security is deemed to be substantially high, then the predetermined response may be to deactivate and isolate the module that is other than synchronized with the synchronized modules. It will be apparent to one of skill in the art that a log entry indicating at least the predetermined response that was initiated is optionally maintained by the master module for subsequent analysis, for instance during one of routine maintenance and replacement of defective modules. Alternatively, if all modules are synchronized, the master module returns the system to a state of normal cryptographic operation at step **507.**

Of course, when the master module is other than synchronized with the synchronized modules, it relinquishes its duties to a second other module within a same module housing. The second other module is designated as a master module according to a predetermined criterion, such as for example the location of the port that it occupies within the communications bus. Once it has been designated as such, the second other module carries out the steps of the routine described with reference to Fig. 5b.

The signal received by the master module at step **500** of the time-consistency routines described with reference to both Fig. 5a and Fig. 5b may be initiated when a predetermined event is indicated, such as the receipt of a digital document to be time stamped, the occurrence of an error within at least a cryptographic module, the detection of a power fluctuation or the detection of external tampering. Of course, it is entirely envisaged that other events either internal to or external to the cryptographic system could also trigger such a signal.

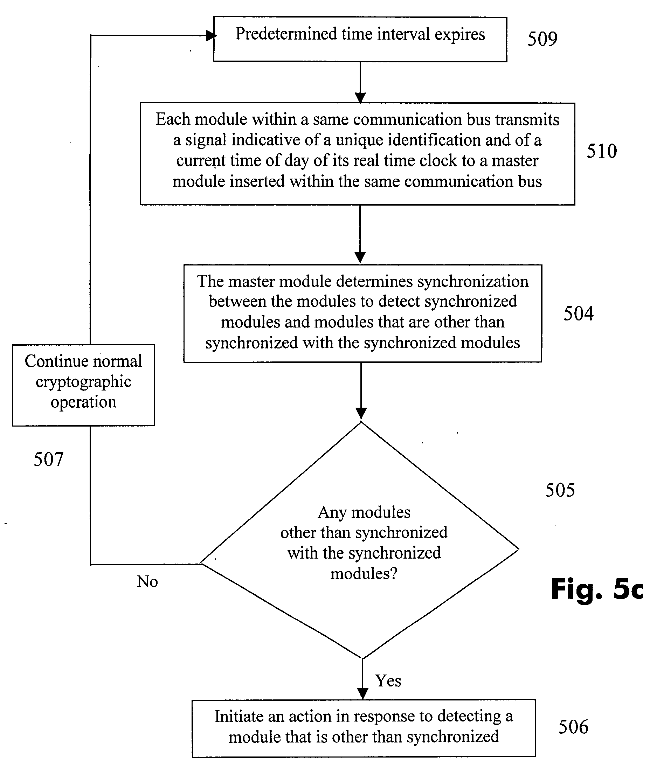

Referring to Fig. 5c, yet another method for performing a periodic consistency check between the "trusted clocks" of a plurality of modules contained within a same communications bus is shown. In the current embodiment a first module is designated as a master module for co-coordinating the time-consistency routines. For instance, the master module is one of the module inserted in a first position of the secure communication bus **6,** the module with the highest level of cryptographic security and the module previously designated as such by a system operator. Absent a polling request, the master module receives an unsolicited signal from each module within a same communication bus at step **510.** The unsolicited signal preferably is sent to the master module at the expiration of predetermined time intervals at step **509,** such as the period of time during which the real time clocks of the modules remain trusted for a specific application. Applications requiring greater time stamping precision have a shorter predetermined time interval compared to applications requiring lower time stamping precision.

The signal indicative of a unique module identification and of a current time of day registered by the real time clock of said module that is sent to the master module at step **510** is preferably a single encrypted and time stamped data packet similar to the one that was returned to the master module at step **508** of Fig. 5b. Absent the polling request from the master module, the data packet is one of a predetermined data packet stored in the memory of the module and a digital document provided previously to the module from the computer system. Of course, other means could also be used to provide a suitable data packet for encryption by the module, such as generating internal to the module at least a random string of alpha-numeric characters. The master module decrypts the encrypted and time stamped data packet and extracts the unique identification to identify and to authenticate the module originating the packet. Further, the master module extracts the time stamp provided by said other module and compares the time of transmission registered by the other module with the time that was registered by the real time clock of the master module when the data packet was received. The processing time required to time stamp and encrypt the data packet transmitted at step **510** can be precisely determined for each module and added to the actual time registered by the real time clock of that module to further improve precision.

Alternatively, the signal indicative of a unique module identification and of a current time of day registered by the real time clock of said module that is sent to the master module at step **510** is a series of two separate signals. The first unencrypted signal includes at least a unique identification for the originating module and an authentication message. The second signal includes at least a same unique identification for the originating module and the exact time that was registered by the real time clock of that module when the first signal was transmitted to the master module. The master module authenticates each other module using the information that was received with the first signal, and additionally determines the exact transmittal time of the first signal from each module using the real time data that was received with the second signal.

The master module determines synchronization between the modules at step **504** to detect synchronized modules and modules that are other than synchronized with the synchronized modules. In one embodiment, the master module determines the value of the difference between the time that it registered when the data packet was received and the time that each other module registered upon transmitting each unique data packet. Since communication between the modules is considered to be approximately instantaneous, each of the values determined by the master module should other than exceed a predetermined tolerance, indicating that all modules are synchronized. Corrections for communication delays over such short distances along a dedicated communication bus are other than necessary since the associated delays are at least an order of magnitude smaller than the maximum precision desired for most time stamping functions.

At decision step **505** the master module initiates a predetermined response at step **506** in dependence upon detecting at least a module that is other than synchronized with the synchronized modules. The predetermined response is in dependence of at least the level of security that is maintained for a particular cryptographic system. If the level of security is deemed to be substantially low then the predetermined response may include a routine for updating the real time clocks of a module that is other than synchronized with the synchronized modules. If the level of security is deemed to be substantially high, then the predetermined response may be to deactivate and isolate the module that is other than synchronized with the synchronized modules. It will be apparent to one of skill in the art that a log entry indicating at least the predetermined response that was initiated is optionally maintained by the master module for subsequent analysis, for instance during one of routine maintenance and replacement of defective modules. Alternatively, if all modules are synchronized, the master module returns the system to a state of normal cryptographic operation at step **507.**

Of course, when the master module is other than synchronized with the synchronized modules, it relinquishes its duties to a second other module within a same module housing. The second other module is designated as a master module according to a predetermined criterion, such as for example the location of the port that it occupies within the communications bus. Once it has been designated as such, the second other module carries out the steps of the routine described with reference to Fig. 5c.

Alternatively, the above described functions that are performed by the master module during execution of one of the time-consistency check routine described with reference to Figs. 5a to 5c could be performed by all modules of the plurality of modules within a same secure communication bus. Improved reliability for the method of synchronization of the real time clocks would result, but at the expense of increased processing time. Such processor intensive routines could be scheduled to occur less frequently, for instance during off-peak hours. Of course, the verification of synchronization by each module allows for identical module functionality and design, and as such is advantageous in many applications.

Further alternatively, each module may periodically transmit a current time value associated with that module to all other modules of the plurality of modules. Upon receipt of said current time value, all other modules determine independently their synchronization status with the originating module, and return a "vote" of synchronized or other than synchronized with the originating module. The originating module then determines a level of agreement with the other modules, for instance the fraction of other modules that "vote" synchronized. When the determined level of agreement with the other modules is above a predetermined threshold value, the originating module resumes normal cryptographic function. When the determined level of agreement with the other modules is below a predetermined threshold value, the originating module disables itself. Alternatively, the originating module requests a synchronization signal from at least a synchronized module for updating the time value associated with the originating module.

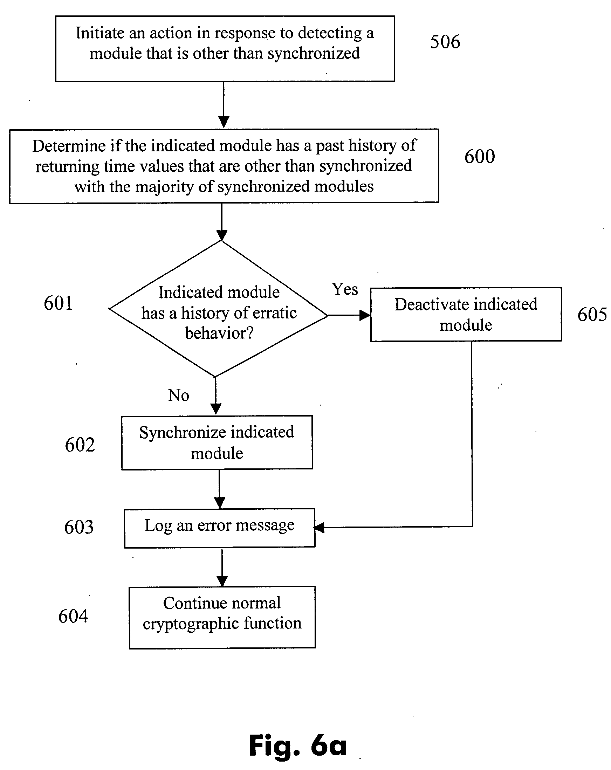

Referring to Fig. 6a, a routine for a predetermined response to be implemented upon the detection of at least a module that is other than synchronized with the synchronized modules is shown. For instance, the predetermined response is initiated at step **506** of one of the time-consistency routines described with reference to Figs. 5a to 5c. The master module, as was previously defined, checks a memory register to determine the time-consistency history of the at least a module that is other than synchronized with the synchronized modules. Preferably, only a predetermined number of most recent time-consistency error log entries are accessed. The predetermined number of the most recent time-consistency error log entries to be considered is determined in dependence upon the level of security that the cryptographic system is assigned. In high security systems, one prior error log entry may constitute a history of erratic behavior. Alternatively, in lower security systems, a threshold number of more than one error log entries must be registered within a predetermined time interval before a module is considered to have a history of erratic behavior.

If a history of erratic behavior for the at least a module that is other than synchronized with the synchronized modules is indicated, the master module deactivates said module at step **605**, logs an error message at step **603** providing an indication that said module was deactivated. Absent the deactivated module, normal cryptographic functions of the cryptographic system **2** are resumed at step **604.** Of course when each module provides identical functionality, the module verifies its own behaviour history and reacts accordingly.

Alternatively, if a history of erratic behavior for the at least a module that is other than synchronized with the synchronized modules is other than indicated, the master module synchronizes said module at step **602** using a current time from the real time clocks of the synchronized modules. The master module logs an error message at step **603** providing an indication that said module exceeded a predetermined tolerance during the current time-consistency check and time stamping the log entry using a current time obtained from its real time clock. Normal cryptographic functions of the cryptographic system **2** are resumed at step **604,** including the functions of the resynchronized module.

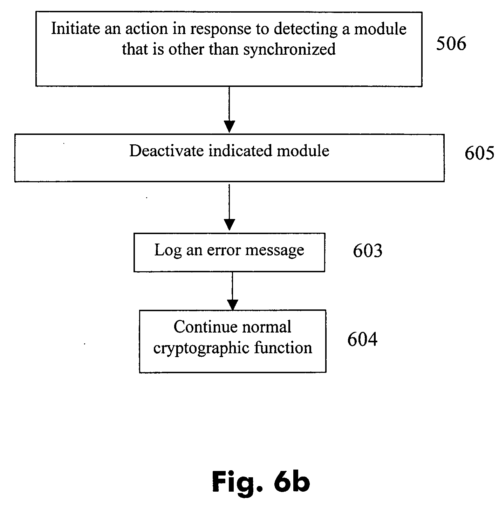

Referring to Fig. 6b, an alternate routine for a predetermined response to be implemented upon the detection of at least a module that is other than synchronized with the synchronized modules is shown. The method of Fig. 6b is implemented for cryptographic systems operating with the highest practical level of security. Immediately upon the detection of a module that is other than synchronized with the synchronized modules at step **506,** that module is deactivated at step **605** and an error message is logged at step **603** providing an indication that said module was deactivated. Absent the deactivated module, normal cryptographic functions of the cryptographic system **2** are resumed at step **604.**

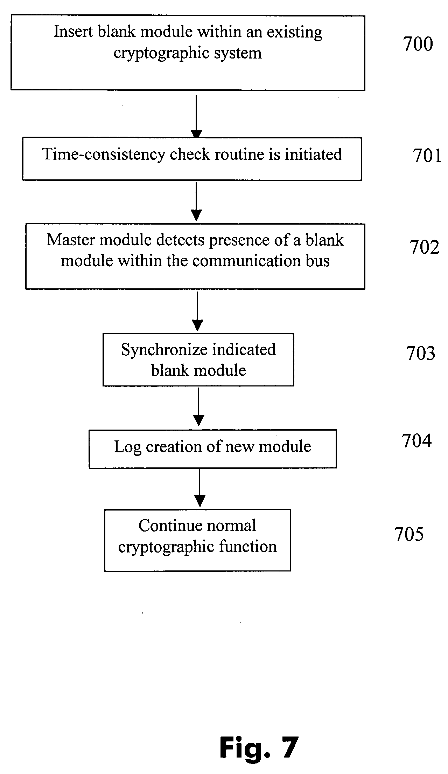

Referring to Fig. 7 a simplified flow diagram of a method for inserting a new time stamping cryptographic token within an existing cryptographic system is shown.
Specifically, if increased demand on the resources of an existing cryptographic system indicates that additional cryptographic modules are required, the system operator can order at least an additional blank module. There is no need to calibrate the real time clocks at the manufacturing facility prior to shipping and to maintain the calibrated time value during transport by supplying an on-board power source. The blank module is inserted into the existing cryptographic system at step **700,** remaining inactive until the next periodic time-consistency check routine is initiated at step **701,** typically within a period of time less than several hours duration and more preferably within a period of time less than several minutes duration. During the time-consistency check routine at step **700,** the blank module is detected by the master module at step **702,** and automatically synchronized with the synchronized modules at step **703.** Of course, the master module logs a message at step **704** providing an indication of the time that the blank module was synchronized at step **703,** however the log entry will be considered a normal behavior for the purpose of determining a history of erratic behavior for said blank module. Normal cryptographic function continues at step **705** with an expanded cryptographic capacity provided by the additional module that was inserted at step **700.**

Alternatively, a module is automatically synchronized with the remaining modules upon intitialisation of said module. Thus, a newly inserted module is, once initialized, synchronized to other timestamping modules within a same housing.

Advantageously, the current methods and system allows modules within a system to automatically correct their time values. Thus even though the clocks may drift slightly with time, the periodic time-consistency checks and synchronization routines allows all modules to continue to function for long periods of time without being replaced. Such a system maintains a current time that is accurate and precise. Further advantageously, communications that are transmitted between modules via the secure communication bus 6 are essentially instantaneous, rendering the time-consistency and synchronization processes very fast. Since all time-based corrections are performed internal to the secure module housing **3,** the possibility of security breaches is also greatly reduced. For instance, it is not necessary to replace modules, or to access an information network or other time-source device that is external to the system in order to perform the periodic time-consistency check and synchronization routine.

Further advantageously, if a module is provided with an on-board power source dedicated to maintaining an initialization status and a time value of a module, removal of that module from the module housing could be authorized, for instance to use the removed module to synchronize modules in another cryptographic system. Such a method would be implemented following the resetting of all modules within a cryptographic system, for instance as a result of a power failure causing loss of power to the cryptographic system. Alternatively, the method would be implemented to synchronize blank modules inserted in a new cryptographic system that is being brought on-line at another location. Advantageously, new cryptographic systems with time stamping function may be synchronized with an existing module, obviating the need to obtain a synchronized module from a manufacturer.

Numerous other embodiments may be envisaged without departing from the spirit or scope of the invention.

## Claims

1. A method for updating an on-board clock device to compensate for individual deviation from a time value comprising the steps of:
a) providing a signal from each of a plurality of modules indicating a time associated with said module and for use by said module in performing time stamping operations;
b) receiving the signal from each of the plurality of modules and determining a synchronization between the modules to detect synchronized modules and modules that are other than synchronized with the synchronized modules; and,
c) when a module is detected as other than synchronized with the synchronized modules, automatically performing one of synchronizing that module with the synchronized modules and disabling that module from performing timestamping operations.

2. A method according to claim 1 wherein each module of the plurality of modules is inserted within a same module housing for at least a same overlapping period of time, the module housing electrically connected to a computer system and for providing communication between each module of the plurality of modules and between the plurality of modules and the computer system.

3. A method according to claim 2 comprising the additional step prior to step (c) of:
authenticating each module of the plurality of modules to determine at least a unique module identification and a current initialization status of said module; and
wherein only those modules that are authenticated are evaluated for synchronization.

4. A method according to claim 3 wherein the step of performing one of synchronizing that module and disabling that module comprises a step of disabling a module that is other than synchronized with the synchronized modules by erasing the cipher data stored within that module and relating to timestamping.

5. A method according to claim 3 wherein the step of performing one of synchronizing that module and disabling that module comprises a step of disabling a module that is other than synchronized with the synchronized modules by setting a flag within the module that is other than synchronized with the synchronized modules, the flag for preventing operation of the module for timestamping operations.

6. A method according to claim 5 wherein the flag is for preventing operation of the module for all security operations.

7. A method according to claim 3 wherein the step of performing one of synchronizing that module and disabling that module comprises a step of synchronizing that module that is other than synchronized with the synchronized modules including the steps of:
initializing the detected module;
sending a new value characteristic of a current time of day to said module; and,
setting the real time clock of said module in dependence upon the received new value.

8. A method according to claim 3 wherein a predetermined first module of the plurality of modules is a master module for performing processor functions for periodically verifying synchronization of each module of the plurality of modules.

9. A method according to claim 8 wherein the signal from each module of the plurality of modules includes at least data for the authentication of said module and data indicating real time information associated with said module.

10. A method according to claim 9 wherein the signal from each of the plurality of modules includes a first signal for providing digital data for the authentication of said module and a second other signal for providing real time information associated with the time of transmission of the first signal.

11. A method according to claim 10 wherein the first signal for providing digital data for the authentication of said module includes at least a data packet encrypted with a key for uniquely authenticating said module.

12. A method according to claim 9 wherein the signal from each of the plurality of modules includes a timestamp indicative of both the real time associated with said module and the module identifier.

13. A method according to claim 12 wherein the signal from each of the plurality of modules is provided automatically at predetermined intervals.

14. A method according to claim 13 wherein the digital data that is encrypted by each of the plurality of modules is one of a predetermined data packet stored in memory of that module and a digital document provided previously to that module from the computer system.

15. A method according to claim 12 wherein the signal from each of the plurality of modules is provided in dependence upon receiving a polling request from the master module.

16. A method according to claim 15 wherein the polling request from the master module includes the digital data for encryption by each module of the plurality of modules.

17. A method according to claim 1 comprising the steps of:
retrieving data indicative of past synchronization status for a detected module;
disabling the detected module when past synchronization status are indicative of a device reliability below a predetermined threshold; and,
synchronizing the detected module when past synchronization status are indicative of a device reliability above a predetermined threshold.

18. A method for verifying an on-board clock device to compensate for individual deviation comprising the steps of:
a) receiving a signal including a plurality of time synchronization values at each of a plurality of modules; and
b) each module determining a synchronization status of itself and, upon determining a status other than in synchronization with the other modules, disabling itself.

19. A method according to claim 18 wherein prior to step (a) each module performs the additional step of providing a value representative of a time associated with that module to each other module of the plurality of modules.

20. A method according to claim 19 wherein the signal including a plurality of time synchronization values received at each module includes a tally of modules that are synchronized with that module and a tally of modules that are other than synchronized to that module, said tallies used by each module to determine its synchronization status.

21. A method according to claim 20 wherein each module determines its synchronization status in dependence upon receiving data indicative of a predetermined minimum fraction of modules being in synchronisation therewith.

22. A method for inserting a new time stamping cryptographic module within an existing cryptographic system comprising the steps of:
a) installing a module within a communication bus;
b) detecting the module; and
c) synchronizing the module by setting the real time clock of the module in dependence upon a value indicative of a current time from the real time clocks of other modules,
wherein the step of detecting the module is performed in response to the module providing a signal indicative of a non-synchronized status of the module.

23. A method for inserting a new time stamping cryptographic module within an existing cryptographic system according to claim 22 wherein the signal is provided when the module is initialized.

24. A method for inserting a new time stamping cryptographic module within an existing cryptographic system according to claim 23 wherein the step of installing the module includes the steps of:
mating a secure port of the module with a corresponding port of the communication bus;
establishing electrical communication between the module and another module;
initializing the module; and,
authenticating the module.

25. A time stamping cryptographic module comprising:
a real time clock for providing a time measurement for time stamping functions;
a microprocessor connected to the real time clock for handling at least a processing function for periodically updating the real time clock;
a secure port in electrical communication with the microprocessor for exchanging information with a device external to the module,
wherein the secure port is for mating with a corresponding port of a secure communication bus to provide a secure communication channel for exchanging a value which is characteristic of a time of day with a second other module mated with a second other corresponding port of a same secure communication bus for at least a same overlapping period of time; and,
a lock for enabling the module in a first state and for disabling the module in a second other state.

26. The apparatus according to claim 25 comprising a tamper detection circuit for detecting unauthorized tampering attempts, for providing a signal in dependence thereon and for deactivating the module in response to the signal indicative of an unauthorized tampering attempt.

27. A time stamping cryptographic module comprising:
a real time clock for providing a time measurement for time stamping functions;
a microprocessor connected to the real time clock for handling at least a processing function for periodically updating the real time clock;
a secure port in electrical communication with the microprocessor for exchanging information with a device external to the module,
wherein the secure port is for mating with a corresponding port of a secure communication bus to provide a secure communication channel for exchanging a value which is characteristic of a time of day with a second other module mated with a second other corresponding port of a same secure communication bus for at least a same overlapping period of time;
means for setting a time of the real time clock in dependence upon a secured time value received from a second other module; and
a tamper detection circuit for detecting unauthorized tampering attempts and for providing a signal in dependence thereon and for deactivating the module in response to the signal indicative of an unauthorized tampering attempt.

28. The apparatus according to any of claims 25 and 27 further comprising an on-board power source for maintaining at least an initialization status and a real time clock value characteristic of a time of day during a power failure.
